(19) Europäisches Patentamt / European Patent Office / Office européen des brevets

(11) **EP 3 896 409 B1**

(12) **EUROPEAN PATENT SPECIFICATION**

(45) Date of publication and mention of the grant of the patent:
**15.03.2023 Bulletin 2023/11**

(21) Application number: **20315187.3**

(22) Date of filing: **17.04.2020**

(51) International Patent Classification (IPC):
**G01H 9/00** *(2006.01)*    **G01D 5/353** *(2006.01)*

(52) Cooperative Patent Classification (CPC):
**G01H 9/004; G01D 5/35358**

(54) **FIBER EVENT DETECTION USING RELIABILITY METRICS**

FASEREREIGNISDETEKTION UNTER VERWENDUNG VON ZUVERLÄSSIGKEITSMETRIKEN

DÉTECTION D'ÉVÉNEMENT DE FIBRES À L'AIDE DE MESURES DE FIABILITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.10.2021 Bulletin 2021/42**

(73) Proprietor: **Nokia Technologies Oy**
**02610 Espoo (FI)**

(72) Inventors:
• **Dorize, Christian**
**78320 LE Mesnil Saint Denis (FR)**
• **Guerrier, Sterenn**
**91300 Massy (FR)**

(74) Representative: **Croonenbroek, Thomas Jakob**
**Innovincia**
**11, avenue des Tilleuls**
**74200 Thonon-les-Bains (FR)**

(56) References cited:
**EP-A1- 3 595 195    US-A1- 2009 111 417**

• **CHRISTIAN DORIZE ET AL: "Enhancing the performance of coherent OTDR systems with polarization diversity complementary codes", OPTICS EXPRESS, vol. 26, no. 10, 4 May 2018 (2018-05-04), page 12878, XP055542643, DOI: 10.1364/OE.26.012878**

**Description**

BACKGROUND

Field of the Invention

Various example embodiments relate to optical equipment such as optical communication equipment and, more particularly but not exclusively, to optical sensing along optical fibers using distributed acoustic/vibration sensing (DAS/DVS).

Description of the Related Art

This section introduces aspects that may help facilitate a better understanding of the invention. Accordingly, the statements of this section are to be read in this light and are not to be understood as admissions about what is prior art or what is not prior art.

Optical fibers are sensitive to surrounding mechanical perturbations which induce fiber length variations, potentially resulting in variations of phase, intensity, and polarization. Though these variations are considered as noise and are thus mitigated in optical transmission systems, they are used for sensing applications in specific configurations such that Optical Time-Domain Reflectometry (OTDR), which exploits random and low-intensity Rayleigh backscattered light.

In a number of different applications, it is useful to be able to detect time-based mechanical and/or chemical changes along an optical fiber, referred to herein collectively as fiber events. For example, in communications systems having fiber-optic communication links, it may be useful to detect the existence and location of fiber events in an optical fiber, such as those induced by a train passing nearby the optical fiber. This information may be used to monitor the quality of the optical link (e.g., a vibration may alter the transmission rate) or to monitor any fiber event independent of the telecom purpose (e.g., for security alerts).

Distributed acoustic/vibration sensing (DAS/DVS) allows for detection of mechanical and/or chemical perturbation at various locations along an optical fiber using Rayleigh backscattering. This effect can be exploited in standard single-mode fibers (SSMF) deployed in telecommunication systems. Randomly distributed Rayleigh backscattering spots exist in the fiber as imperfections during its fabrication process. By capturing the optical signal that is reflected from these spots, phase changes induced by fiber events impacting a deployed fiber can be detected.

C. Dorize and E. Awwad, "Enhancing the performance of coherent OTDR systems with polarization diversity complementary codes," Optics Express, 26(10), pp. 12878-12890, 2018 ("the Dorize/Awwad paper"), and E. Awwad, C. Dorize, P. Brindel, J. Renaudier and G. Charlet, "Large Bandwidth Phase-Sensitive DAS with Novel Polarization-Multiplexed Probing Technique," Optical Fiber Sensors (OFS26) conference, Lausanne, Switzerland, paper ThE63, 2018 ("the OFS26 paper"), describe a method for periodically capturing an estimate (high sensitivity and large bandwidth) of the backpropagated optical field in a fiber. The method may yield Jones matrix estimates as a function of distance and time from which the differential (over distance) phase (at different locations over the distance axis as a function of time) may be processed to detect the emergence of fiber events.

EP 3460441 A1 describes systems that employ the dual-polarization optical sensing techniques described in the Dorize/Awwad and OFS26 papers for detecting and accurately estimating the location of fiber events in optical fibers. Such optical sensing techniques may be referred to as MIMO (multiple-in, multiple-out) techniques, since the optical signals have two polarization components at both the transmitter and the receiver.

EP 3595195 A1, describes systems that employ multi-resolution optical sensing techniques for detecting and accurately estimating the location of fiber events in optical fibers while reducing the signal processing load to enable such optical sensing systems to be made using practical hardware implementations.

EP 19305164.6, describes systems that employ multi-carrier optical sensing techniques for detecting and accurately estimating the location of fiber events in optical fibers to overcome coherent fading and thereby extend the performance and the flexibility of the optical sensing.

EP 20305062.0, describes systems that employ optical sensing techniques for detecting and accurately estimating the location of fiber events in multi-fiber optical cables. A fraction of the forward-propagating light in one of the so-called forward fibers is looped back to a nearby point on a feedback fiber by a local pair of interconnected optical couplers. Such a technique may provide a twofold advantage: (1) a mitigation of the low phase noise variations of the transmitter (laser source), due to the reference feedback path information, and (2) a localization of fiber events along the fiber, e.g., with a spatial resolution equal to the span length.

Although the MIMO optical sensing techniques described in EP 3460441 A1, EP 3595195 A1, EP 19305164.6, and EP 20305062.0 (collectively, "the cited EP applications") and in the Dorize/Awwad and OFS26 papers are by far more robust to fading effects induced by standard SISO (single-in, single-out) and SIMO (single-in, multiple-out) probing alternatives, the estimated differential phase terms used to detect fiber events are not all valid. This is due to unreliable phase extraction from some Jones matrices, which leads to phase artefacts in the time versus distance plane that superimpose on the actual information and cause local distortion in the captured signal, potentially leading to misinterpretation in the further identification / classification process, such as false positive detections of fiber events along a sensed optical fiber.

According to certain embodiments of the present disclosure, optical sensing systems that detect and accurately estimate the location of fiber events in optical fibers employ a reliability metric to characterize the reliability of data derived during the optical sensing process. One reliability metric is the magnitude of the determinant of the Jones matrix for different locations along a fiber and different times corresponding to different instances of an optical probing signal injected into the fiber. Note that, since the determinant of the Jones matrix is typically a complex value, the magnitude of the determinant is equivalent to the modulus of the determinant. Such a reliability metric can be used to select a subset of the available fiber locations for fiber-event detection, where the selected locations are those that produce more-reliable results. In addition or alternatively, since fiber events are detected at particular locations and times and since the reliability metrics indicate the reliability of the estimated phase values at particular locations and times, the corresponding reliability metric at the location and time associated with a detected fiber event can be used to characterize the reliability of that fiber-event detection.

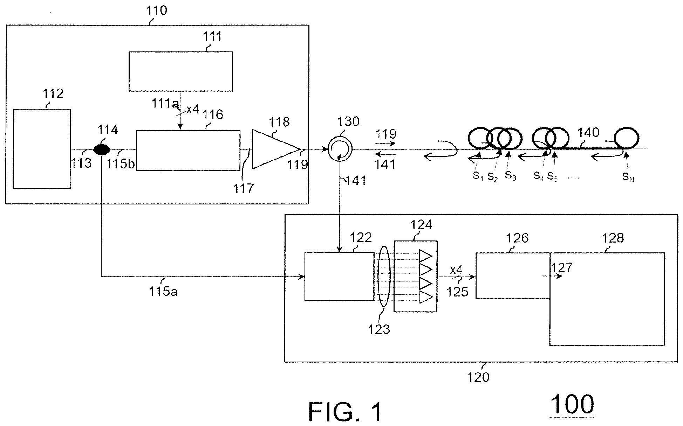

According to an example embodiment disclosed below in reference to FIGs. 1-4, provided is an apparatus comprising an optical transceiver (e.g., 110, 120, 130) configured to transmit light (e.g., 119) into an end of an optical fiber line (e.g., 140) and to perform phase-sensitive measurements of a part (e.g., 141) of the transmitted light received at the same end of the optical fiber line. The optical transceiver includes a digital processor (e.g., 128) configured to determine dual-polarization channel matrices for pairs of time and location values (e.g., $S_i$) based on the measurements, each of the dual-polarization channel matrices describing the part of the light received in response to being passively redirected back at the time and location values of a corresponding one of the pairs. The digital processor is configured to identify some of the location values as suitable location values for detecting fiber events along the optical fiber line based on magnitudes of determinants of the dual-polarization channel matrices determined for the location values.

In some embodiments of the above apparatus, the suitable location values correspond to largest ones of the determined magnitudes.

In some embodiments of any of the above apparatuses, the digital processor is further configured to evaluate the dual-polarization channel matrices for each of the suitable location values at a sequence of time values and is configured to detect one or more fiber events based on a time evolution of the evaluated matrices.

In some embodiments of any of the above apparatuses, the digital processor is configured to detect one or more fiber events based on a time evolution of phases of the determinants of the evaluated matrices.

In some embodiments of any of the above apparatuses, each detected fiber event corresponds to a vibration of a segment of the optical fiber line.

In some embodiments of any of the above apparatuses, the digital processor is configured to provide estimated locations and times for the detected one or more fiber events.

In some embodiments of any of the above apparatuses, the optical transceiver is further configured to characterize reliability of individual ones of the detected one or more fiber events based on the magnitude of the determinant of the dual-polarization channel matrix at the estimated location and time for the individual ones of the detected one or more fiber events.

In some embodiments of any of the above apparatuses, identifying the suitable location values comprises combining the magnitudes of the determinants of the dual-polarization channel matrices for each location value for multiple time values to generate a combined magnitude value for each location value; dividing the location values along the optical fiber line into multiple sub-groups of adjacent location values; and, for each sub-group of adjacent location values, selecting a location value in the sub-group having the greatest combined magnitude value in the sub-group as one of the suitable location values.

In some embodiments of any of the above apparatuses, the optical transceiver is configured to transmit light into an end of an optical fiber of the optical fiber line and to perform optical time-domain reflectometry on a part of the transmitted light received at the same end of the same optical fiber of the optical fiber line.

According to another example embodiment disclosed below in reference to FIGs. 1-4, provided is a method comprising determining dual-polarization channel matrices for pairs of time and location values by performing phase-sensitive optical time-domain reflectometry on an optical fiber line (e.g., 140), each of the dual-polarization channel matrices describing light (e.g., 141) received from an end of the optical fiber line in response to light (e.g., 119) being transmitted into said end and being backscattered in the optical fiber line at the time and location values of a corresponding one of the pairs; and identifying some of the location values as suitable location values for detecting fiber events along the optical fiber line based on magnitudes of determinants of the dual-polarization channel matrices determined for the location values.

In some embodiments of the above method, the suitable location values correspond to largest ones of the determined magnitudes.

In some embodiments of any of the above methods, the method further comprises evaluating the dual-polarization channel matrices for each of the suitable location values at a sequence of time values; and detecting one or more fiber events based on a time evolution of the evaluated matrices.

In some embodiments of any of the above methods, the detecting one or more fiber events is based on a time evolution of phases of the determinants of the evaluated matrices.

In some embodiments of any of the above methods, the detecting includes providing one or more estimated locations and times of the one or more detected fiber events.

In some embodiments of any of the above methods, the method further comprises characterizing reliability of individual ones of the detected one or more fiber events based on the magnitude of the determinant of the dual-polarization channel matrix at the estimated location and time for the individual ones of the detected one or more fiber events.

BRIEF DESCRIPTION OF THE DRAWINGS

Embodiments of the invention will become more fully apparent from the following detailed description, the appended claims, and the accompanying drawings in which like reference numerals identify similar or identical elements.

FIG. 1 is a block diagram of an optical sensing system that is designed and configured to detect and determine the locations of fiber events along the length of an optical fiber;

FIG. 2 is a block diagram of the processing performed by the DSP of FIG. 1 to detect fiber events in the optical fiber according to an embodiment;

FIG. 3 is a flow diagram of example processing performed by the optical sensing system of FIG. 1 to select a subset of the available locations along the optical fiber to be used to detect fiber events; and

FIG. 4 is a flow diagram of example processing performed by the optical sensing system of FIG. 1 to detect fiber events using the subset of locations selected using the processing of FIG. 3.

DETAILED DESCRIPTION

Detailed illustrative embodiments of the present invention are disclosed herein. However, specific structural and functional details disclosed herein are merely representative for purposes of describing example embodiments of the present invention. The present invention may be embodied in many alternate forms and should not be construed as limited to only the embodiments set forth herein. Further, the terminology used herein is for the purpose of describing particular embodiments only and is not intended to be limiting of example embodiments of the invention.

As used herein, the singular forms "a," "an," and "the," are intended to include the plural forms as well, unless the context clearly indicates otherwise. It further will be understood that the terms "comprises," "comprising," "includes," and/or "including," specify the presence of stated features, steps, or components, but do not preclude the presence or addition of one or more other features, steps, or components. It also should be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

At least some embodiments disclosed herein may benefit from the use of at least some features disclosed in the Dorize/Awwad and OFS26 papers and the EP applications. In particular, some embodiments may benefit from the use of the DAS/DVS technique(s) disclosed therein. An example DAS/DVS technique described herein enables detection of fiber events along an optical fiber using distributed acoustic/vibration sensing based on optical phase sensing of reflected optical signals that are analyzed to detect temporal changes in the characteristics of different locations along the optical fiber.

FIG. 1 is a block diagram of an optical sensing system 100 that is designed and configured to detect and determine the locations of fiber events along the length of an optical fiber 140. In some applications, the optical fiber 140 is part of a communications network, and the optical sensing system 100 is provisioned to monitor the optical fiber 140. The following discussion describes the generic operations of the optical sensing system 100. The reliability metric-based operations of the optical sensing system 100 are described after the generic description.

Generic Description

Optical sensing system 100 comprises an optical transmitter 110, an optical receiver 120, and an optical circulator 130. As indicated in FIG. 1, the fiber 140 has a number ($N$) of Rayleigh backscatterers $S_i$ distributed along its length, where the Rayleigh backscatterers $S_1$, $S_2$, ..., $S_N$ are intrinsic features formed during the fabrication of a doped optical fiber. As described previously, the term "fiber event" is used to refer to a mechanical and/or chemical change at a location along the length of the fiber 140 that results in a significant change in the differential phases of the signals reflected by one or more Rayleigh backscatterers located downstream of the fiber event. For example, a mechanical event might be receipt of vibrations due to a seismic wave and/or a water wave. In certain implementations, the transmitter 110, the receiver 120, and the circulator 130 are mounted inside a mechanically and electromagnetically insulated environment (not shown).

As used herein, the term "upstream" refers to locations along the fiber 140 that are closer to the transmitter 110, while the term "downstream" refers to locations along the fiber 140 that are farther from the transmitter 110. Thus, in FIG. 1, backscatterers $S_1$ and $S_2$ are upstream of backscatterer $S_3$, and backscatterers $S_4$ and $S_5$ are downstream of backscatterer $S_3$.

The optical sensing system 100 may use an interrogation technique as defined in the Dorize/Awwad paper to generate a Jones matrix estimate for the intensity peak corresponding to each of the roundtrip paths, where the path from the circulator 130 to each backscatterer $S_i$ along the fiber 140 and back to the circulator 130 along the fiber 140 corresponds to a different roundtrip path. For each roundtrip path, the cumulative optical phase is extracted from one or more elements of the Jones matrix. The optical phase terms are then differentiated between consecutive roundtrip paths to capture a local differential (in distance) phase estimation for each roundtrip path. The interrogation and associated processing are applied periodically to characterize a time evolution of the local differential phase per roundtrip path. Fiber events are then detected by analyzing the time evolutions for the different roundtrip paths.

In the particular implementation of FIG. 1, the transmitter 110 comprises a pulse pattern generator 111, a high coherence laser source 112, a polarization-maintaining (PM) coupler 114, a Mach-Zehnder (MZ) (or other suitable polarization diversity) optical modulator 116, and an erbium-doped fiber amplifier (EDFA) (or other suitable amplifier) 118. The PM coupler 114 taps off a portion 115a of the polarized laser source signal 113 generated by the laser source 112 and forwards that portion 115a to the optical receiver 120. The MZ modulator 116 modulates the remainder 115b of the laser signal based on four digital-coded analog signals 111a generated by the pulse pattern generator 111 to generate a modulated optical signal 117 that is amplified by the EDFA 118 to generate the outgoing modulated optical probing signal 119. In one possible implementation, the four digital-coded analog signals 111a are based on complementary binary phase shift-keying (BPSK) in-phase I and quadrature Q codes that get modulated onto the horizontal (X) and vertical (Y) polarization components of the polarized laser signal 115b. Note that, in polarization-division-multiplexed (PDM) BPSK, the Q codes are optional. Those skilled in the art will understand that other coding schemes may be employed, including (without limitation) PDM quadrature-phase shift keying (QPSK) and the dual-polarization digital sweep probing technique described in EP application no. 19306137.1.

The transmitter 110 injects the probing signal 119 into the fiber 140 via the circulator 130, and the probing signal 119 gets partially reflected by each Rayleigh backscatterer $S_i$ back towards the circulator 130. The resulting optical feedback signal 141 received by the circulator 130 from the fiber 140 is a combined optical signal corresponding to the superposition of all of the different reflected optical signals from the different Rayleigh backscatterers shifted in time (and therefore in phase) relative to one another based on the round-trip transmission time from the circulator 130 to the particular backscatterer and then back to the circulator 130. The combined optical feedback signal 141 is forwarded by the circulator 130 to the receiver 120, which processes the feedback signal 141 to characterize the various reflected signals from the backscatterers at specified locations along the fiber 140, where the location d of each backscatterer is associated with and can be identified by a unique round-trip transmission time based on its distance along the fiber 140. Note that, since the method might not be able to distinguish between all reflecting silica imperfections, in some implementations, the term "backscatterer" refers to all of the reflecting silica imperfections in a given fiber segment, where the reflections from those imperfections are integrated according to a given spatial resolution called "gauge length" fixed by the baud rate of the probing code. In that case, as used below, the term "backscatterer" should be interpreted as being equivalent to the term "fiber segment."

The OTDR optical receiver 120 of FIG. 1 may typically be a dual-polarization coherent receiver that comprises a 90-degree hybrid coherent mixer 122 in a substantially homodyne configuration in which the local oscillator is the laser source 112 used to charge the fiber 140, where the feedback signal 141 will typically have a relative time delay with respect to the local oscillator light 115a due to the roundtrip propagation in the fiber 140. In addition, the receiver 120 includes four optical-to-electrical (O-to-E) converters 124, four analog-to-digital converters (ADCs) 126, and a digital signal processor (DSP) 128.

The mixer 122, which comprises, e.g., two single-polarization 90-degree hybrids (not shown), mixes the feedback signal 141 received from the circulator 130 with the tapped polarized laser signal 115a received from the PM coupler 114 to generate four different pairs of optical components 123 for sensing respective in-phase and quadrature beating signals between the horizontal and vertical polarization components of the polarized laser signal 115a and the horizontal and vertical polarization components of the feedback signal 141 or linearly independent combinations of said four components. The O-to-E converters 124 convert those eight optical components 123 into four analog electrical signals 125 that get digitized by the four ADCs 126 into digital signals 127 that are processed by the DSP 128. In one implementation, the O-to-E converters 124 comprise (i) four balanced photodetector pairs (not explicitly shown) configured to convert the four pairs of optical components 123 into four analog electrical signals, via differential sensing, and (ii) four trans-impedance amplifiers (TIAs) configured to amplify the four analog electrical signals to generate the four analog electrical signals 125 that are digitized by the four ADCs 126.

The DSP 128 determines the channel response of the fiber 140 by measuring correlations between the digital signals 127 and the digital code sequences used to generate the digital-coded analog signals 111a and then generates some or all of the Jones matrix elements for different locations along the fiber 140 using corresponding data points of the channel response. Assuming that the fiber 140 has been probed jointly on both polarization axes by means of complementary digital code sequences, the DSP 128 is configured to generate (2x2) Jones matrices $J(d,t)$ at time index $t$ and distance index $d$ from the four digital signals 127, e.g., using some of the procedures disclosed in the Dorize/Awwad and OFS26 papers and the EP applications.

The DSP 128 derives, from determined elements of the Jones matrices, phase data $\varphi(d,t)$ and differential phase data $\Delta\varphi(d,t)$ as a function of time $t$ for different locations $d$ along the fiber 140, where each location is identified by a distance index value $d$ representative of the round-trip transmission time for that location. The DSP 128 (or some other processing module downstream of the DSP 128) analyzes the differential phase data to identify fiber events. For example, if the DSP 128 detects a sinusoidal oscillation over time in the differential phase data for a particular location, then the DSP 128 can determine that a vibration in the fiber 140 occurred at or near that location. If, on the other hand, the DSP 128 detects a step function over time in the differential phase data for a particular location, then the DSP 128 can determine that a chemical change in the fiber 140 occurred at or near that location.

The transmission of the probing signal 119 can be periodically repeated, as long as reflections corresponding to different transmissions of the digital codes do not overlap. One way to prevent such overlap is to ensure that the employed digital codes are at least as long as the maximum round-trip transmission time from the circulator 130 to the last backscatterer and back to the circulator 130. In that case, the probing signal 119 can be transmitted continuously.

In certain implementations, the polarized laser signal 115b has a sufficiently long coherence time. In particular embodiments, the laser source 112 that drives the transmitter 110 and the receiver 120 has a coherence time greater than the maximum propagation time of the probing signal 119 on the fiber 140 from the transmitter 110 to the receiver 120. By using the laser source 112 as the local oscillator for charging the fiber 140, the optical sensing system 100 is able to detect fiber events with a spatial resolution equal to the distance between consecutive backscatterers $S_i$, while mitigating low phase noise variations of the laser source 112.

In one example embodiment, the optical sensing system 100 monitors the fiber 140 to monitor ground comprising oil and gas resources. The symbol frequency is determined as $f_{symb}$=100MHz, with span length $d_s$=10m and the CUT length=1km. The coherence time of the laser source 112 is then on the magnitude of $10^{-5}$s corresponding to a spectral line width of 100 kHz.

Two pairs of Golay sequences can be used to generate the X- and Y-axis modulation codes for the probing signal 119 of FIG. 1. In general, a Golay sequence G(n) contains a sequence of values, where each value is either +1 or -1. Two Golay sequences $G_a(n)$ and $G_b(n)$ are said to be complementary if they exhibit the following property:

$$G_a(n)\otimes G_a(n) + G_b(n)\otimes G_b(n)=\delta(n) \qquad (1)$$

where n is for a given symbol, $\otimes$ is the correlation operator, and $\delta$ is the Dirac delta function (scale factor omitted here). The correlation between two signals x(n) and y(n) can be defined relative to the convolution operator * as follows: $x(n)\otimes y(n) = x(n) * y(n)^*$, where $y(n)^*$ denotes the complex conjugate of y(n).

Two different pairs of complementary Golay sequences can be used to generate the digital-coded analog signals 111a used to generate the probing signal 119. According to one possible coding scheme, a first pair of complementary sequences $G_{1a}$, $G_{1b}$ is defined as:

$$G_{1a}(n)\otimes G_{1a}(n) + G_{1b}(n)\otimes G_{1b}(n)=\delta(n) \qquad (2)$$

A second pair of complementary sequences $G_{2a}$, $G_{2b}$ is generated to be mutually orthogonal with the first pair, such that:

$$G_{2a}(n)\otimes G_{2a}(n) + G_{2b}(n)\otimes G_{2b}(n)=\delta(n) \qquad (3)$$

$$G_{1a}(n) \otimes G_{2a}(n) + G_{1b}(n) \otimes G_{2b}(n) = 0 \tag{4}$$

$$G_{a1}(n) \otimes G_{b1}(n) + G_{a2}(n) \otimes G_{b2}(n) = 0 \tag{5}$$

The following represents four Golay sequences having length $N_G = 4$:

$$G_{1a}^4 = [\ 1, -1, -1, -1] \tag{6}$$

$$G_{1b}^4 = [-1, \ 1, -1, -1] \tag{7}$$

$$G_{2a}^4 = [-1, -1, \ 1, -1] \tag{8}$$

$$G_{2b}^4 = [\ 1, \ 1, \ 1, -1] \tag{9}$$

Longer Golay sequences can be generated using the following recursive relationships:

$$G_{1a}^{2Ng} = \left[ G_{1a}^{Ng}, \ G_{1b}^{Ng} \right] \tag{10}$$

$$G_{1b}^{2Ng} = \left[ G_{1a}^{Ng}, -G_{1b}^{Ng} \right] \tag{11}$$

$$G_{2a}^{2Ng} = \left[ G_{2a}^{Ng}, \ G_{2b}^{Ng} \right] \tag{12}$$

$$G_{2b}^{2Ng} = \left[ G_{2a}^{Ng}, -G_{2b}^{Ng} \right] \tag{13}$$

Those skilled in the art will understand that different combinations of the Golay sequences $G_{1a}$, $G_{1b}$, $G_{2a}$, and $G_{2b}$ can be used to generate symbols for the X- and Y-axis codes. For example, as indicated above, if the Golay sequences $G_{1a}$ and $G_{1b}$ are used to generate the symbols for the X-axis code, then the Golay sequences $G_{2a}$ and $G_{2b}$ are used to generate the symbols for the Y-axis code.

In one possible implementation of the coding scheme described above, the Golay sequences of Equations (6)-(9) are used and each symbol is a BPSK symbol. In that case, the X-axis code has two BPSK symbols, where each BPSK symbol encodes one value from the corresponding Golay sequence. Thus, for the X-axis code, the first BPSK symbol encodes the Golay sequence $G_{1a}^4 = [1, -1, -1, -1]$, and the second BPSK symbol encodes the Golay sequence $G_{1b}^4 = [-1, 1, -1, -1]$. For the Y-axis code, the first BPSK symbol encodes the Golay sequence $G_{2a}^4 = [-1, -1, 1, -1]$, and the second BPSK symbol encodes the Golay sequence $G_{2b}^4 = [1, 1, 1, -1]$. Other possible sets of X- and Y-axis codes may be generated in similar fashion based on other combinations of the Golay sequences of Equations (6)-(9).

The following description applies to processing associated with the probing signal 119 for the coding scheme described above, where each symbol is a BPSK symbol.

The two complementary and orthogonal pairs of Golay sequences $G_{1a}$, $G_{1b}$ and $G_{2a}$, $G_{2b}$ are transmitted simultaneously. BPSK modulation is used to code the pairs of sequences. Using complementary and orthogonal pairs of sequences enables the sending of the sequences to be factorized. On the X polarization axis, the two sequences

$G_{1a}$, $G_{1b}$ of the first complementary pair are successively mapped onto BPSK symbols. At the same time, on the Y polarization axis, the two sequences $G_{2a}$, $G_{2b}$ of the second complementary pair are successively mapped onto BPSK symbols. The BPSK symbols from the two polarizations axes are transmitted simultaneously: the BPSK symbols carrying $G_{1a}$ on the X polarization axis are sent at the same time as the BPSK symbols carrying $G_{2a}$ on the Y polarization axis, and then the BPSK symbols carrying $G_{1b}$ on the X polarization axis are sent at the same time as the BPSK symbols carrying $G_{2b}$ on the Y polarization axis.

In an example, the factorization of the parts of the pairs for the X and Y polarizations are as follows:

$$E_{tx}(n + kP) = G_x(n) \qquad (14)$$

$$E_{ty}(n + kP) = G_y(n) \qquad (15)$$

where $E_{tx}$ is the component from the X polarization of the probing signal 119, $E_{ty}$ is the component from the Y polarization of the probing signal 119, $P$ is the repetition period, $k$ is the $k$-th repetition of period $P$, $G_x$ and $G_y$ being respective complementary Golay sequences.

In an example where BPSK is used:

$$G_x(n) = \begin{cases} G_{1a}(n); 0 \le n < N_G \\ 0; N_G \le n < N_G + N_{Sep} \\ G_{1b}(n - N_G - N_{Sep}); N_G + N_{Sep} \le n < 2N_G + N_{Sep} \\ 0; 2N_G + N_{Sep} \le n < L \end{cases} \qquad (16)$$

$$G_y(n) = \begin{cases} G_{2a}(n); 0 \le n < N_G \\ 0; N_G \le n < N_G + N_{Sep} \\ G_{2b}(n - N_G - N_{Sep}); N_G + N_{Sep} \le n < 2N_G + N_{Sep} \\ 0; 2N_G + N_{Sep} \le n < L \end{cases} \qquad (17)$$

where $N_G$ is the length of a sequence from the pair, $N_{Sep}$ is an optional separation interval, and $L=2(N_G+N_{Sep})$ is the overall transmitted code length.

The sequence $G_{1a}$ is transmitted first on the X polarization together with the sequence $G_{2a}$ on the Y polarization, then the sequence $G_{1b}$ is transmitted on the X polarization together with the sequence $G_{2b}$ on the Y polarization. To clarify, for the X polarization channel, the sequence $G_{1a}$ is transmitted, followed by the sequence $G_{1b}$. Simultaneously, for the Y polarization channel (orthogonal to X), the sequence $G_{2a}$ is transmitted, followed by the sequence $G_{2b}$. Note that, if $N_{Sep}$ is set to zero, then the sequence $G_{1b}$ is transmitted immediately after the sequence $G_{1a}$ on the X polarization and the sequence $G_{2b}$ is transmitted immediately after the sequence $G_{2a}$ on the Y polarization.

At the receiver 120, the feedback signal 141 comprises the following components:

$$E_{rx}(n) = h_{xx}(n) * G_x(n) + h_{xy}(n) * G_y(n) \qquad (18)$$

$$E_{ry}(n) = h_{yx}(n) * G_x(n) + h_{yy}(n) * G_y(n) \qquad (19)$$

where $E_{rx}$ is the X polarization component, $E_{ry}$ is the Y polarization component, $h_{xx}$ is the channel response of the fiber 140 for the X polarization, $h_{yy}$ is the channel response of the fiber 140 for the Y polarization, $h_{xy}$ is the channel response after modulation onto the Y polarization and measured onto the X polarization at the receiver 120, and $h_{yx}$ is the channel response after modulation onto the X polarization and measured onto the Y polarization at the receiver 120.

The polarization-dependent channel responses as observed at the receiver 120 can then be expressed as:

$$h'_{xx}(n) = E_{rx}(n) \otimes G_x(n) \qquad (20)$$

$$h'_{xy}(n) = E_{rx}(n) \otimes G_y(n) \qquad (21)$$

$$h'_{yx}(n) = E_{ry}(n) \otimes G_x(n) \qquad (22)$$

$$h'_{yy}(n) = E_{ry}(n) \otimes G_y(n) \qquad (23)$$

where the estimated dual-polarization channel is expressed under the form of Jones matrices $J$ defined as:

$$J = \begin{bmatrix} h'_{xx}(n) & h'_{xy}(n) \\ h'_{yx}(n) & h'_{yy}(n) \end{bmatrix} \qquad (24)$$

In an embodiment, the probing sequence duration is determined according to $N_G$, $N_{sep}$, and the duration of a symbol $T_{symb}$. In an example, a perfect estimation with only null samples around the Dirac response is achievable if the fiber 140 has an impulse response with a duration $T_{ir}$ that spreads over a time less than $(N_G/2+N_{sep})T_{symb}$. In another example, the sequence length $N_G$ and the separation interval $N_{sep}$ are determined such that $N_G > 2(T_{ir}/T_{symb}-N_{Sep})$.

In an embodiment, the symbol rate of the probing signal 119 is determined according to the distance between consecutive backscatterers $S_i$, in order to increase the number of null samples of the inter-correlations of the components $G_x$, $G_y$. In an example, the symbol rate is determined as follows:

$$f_{symb} = \frac{4p}{\frac{2n_g d_s}{c}} \qquad (25)$$

where $f_{symb}$ is the symbol rate, $n_g$ is the fiber group index, $c$ is the light velocity, $d_s$ is the average inter-distance between consecutive backscatterers $S_i$, and $p$ is an integer. In an example, with 1km of inter-distance $d_s$ between consecutive backscatterers $S_i$, $f_{symb}$ is a multiple of 400kHz.

In an embodiment, the transmission of the pairs of sequences $G_{1a}$, $G_{1b}$ and $G_{2a}$, $G_{2b}$ is repeated. Such repetitions are advantageous as the fiber 140 and the backscatterers $S_i$ are probed continuously, thereby enabling monitoring the fiber 140 for fiber events with a fine time granularity, which depends on the symbol frequency and on the overall length of the fiber 140. The probing duration of the fiber 140 is performed then during at least one duty cycle. For PDM-BPSK codes, the probing duration should be spread over at least four duty cycles. For dual-polarization digital sweep signals, the probing duration should be spread over at least two duty cycles.

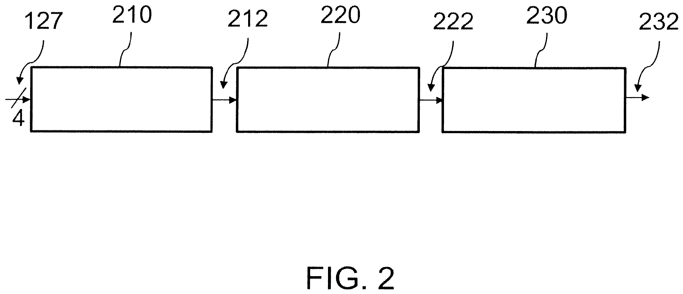

FIG. 2 is a block diagram of the processing performed by the DSP 128 of FIG. 1 to detect fiber events 232 in the fiber 140 according to an embodiment. A correlation module 210 performs correlation processing between the four digital signals 127 received from the four ADCs 126 of FIG. 1 and the four corresponding digital code sequences 111a used to generate the probing signal 119 in order to extract a space-time map 212 of the Jones matrices $J(d,t)$. The correlation processing consists of four correlations to estimate the four coefficients of the (2x2) Jones matrices describing the temporal evolution of intensity, differential phase, and SOP along the fiber 140 segment by segment. For the BPSK coding scheme described previously, example correlations are presented in Equations (20)-(23).

The spatial resolution (i.e., the size of the fiber segments over which the Jones matrices are computed) is fixed by the baud rate, and the temporal resolution is given by the length of the probing code. The estimates of the Jones matrices are refreshed with a temporal resolution given by the period $T_{code}$ of the probing sequence assuming that the fiber 140 is probed by a repetition of this sequence. Note that $T_{code}$ fixes the maximum bandwidth $BW$ of the fiber events that can be monitored: $BW = 1/(2T_{code})$.

A computation module 220 processes the Jones matrices 212 to generate fiber data 222. In an embodiment, the fiber data 222 includes differential phase data $\Delta\varphi(d,t)$, optical intensity data $I(d,t)$, and state of polarization data $SOP(d,t)$ for different locations $d$ along the fiber 140 at different times $t$.

The DSP 128 derives absolute phase values $\varphi(d,t)$ from the Jones matrices $J$ by calculating $\varphi(d,t)=(1/2)arg(det(J))$, where $det$ stands for the determinant of matrix $J$ and $arg$ stands for the angle, expressed in radians, of the complex value $det(J)$. The absolute phase value $\varphi(d,t)$ for a location d represents the phase offset at time $t$ between the probing signal 119 at a backscatterer at that location d and the corresponding reflected portion of the probing signal 119 contained in the feedback signal 141 received at the receiver 120. The DSP 128 generates differential (over distance) phase values $\Delta\varphi(d,t)$ by calculating $\Delta\varphi(d,t) = (\varphi(d,t) - \varphi(d-1,t))$, where each differential phase value $\Delta\varphi(d,t)$ represents the difference between the absolute phase value $\varphi(d,t)$ for the location d and the absolute phase value <p(d-1,f) for the previous location $d$-1. As used herein, the term "previous location" refers to the location of the backscatterer that is immediately upstream from the location d.

The DSP 128 generates the intensity data $I(d,t)$ as $Trace(J.J^*)$ for each selected location $d$ and time $t,$ where $Trace$ refers to the sum of the elements on the diagonal of a matrix, $J^*$ stands for the conjugate transpose of the (2x2) Jones matrix $J$, and $(J.J^*)$ represents the matrix product of the two matrices.

In an embodiment, the DSP 128 generates the SOP data $SOP(d,t)$ from the Jones matrices using a suitable technique such as those based on the conventional Stokes or Muller mathematical transformation.

In an event detection stage 230, the DSP 128 (or, in some alternative implementations, a processor external to the DSP 128) monitors the differential phase data 222 over multiple transmissions of the probing signal 119 to detect fiber events 232. When a fiber event eventually occurs at some location along the fiber 140, the DSP 128 can detect that fiber event based on the temporal changes in the differential phase data 222 for the backscatterer $S_i$ located immediately downstream of the fiber event (referred to as the "detected location"). If the differential phase data 222 at a detected location indicates the existence of a fiber event, then the DSP 128 can conclude that the fiber event has occurred at or immediately upstream of that detected location.

For example, for two consecutive backscatterer $S_i$ and $S_{i+1}$, where the backscatterer $S_i$ is upstream from the backscatterer $S_{i+1}$, if the DSP 128 detects the existence of a fiber event 232 in the differential phase data 222 corresponding to the location of the backscatterer $S_{i+1}$, then the DSP 128 can conclude that the fiber event occurred at a location that is somewhere (i) downstream of the backscatterer $S_i$ and (ii) at or upstream of the backscatterer $S_{i+1}$.

In one possible implementation, the DSP 128 can be configured to conclude that a fiber event 232 has occurred when the variance of the differential phase data 222 for a location $d$ over a specified duration exceeds a specified variance threshold level. Other implementations may apply other criteria for detecting fiber events, including but not limited to thresholding the magnitude of the change in the differential phase data 222 over a specified duration. A possible alternative criterion would be to search for a significant value or a significant change in the value in the power spectral density of the differential phase data 222, for example, the occurrence of a spectral peak.

In single-carrier DAS/DVS systems using excitation codes, the segment size (i.e., the native spatial resolution))$d$ is given by the symbol rate $F_{symb}$ of the probing code: )d $=c_{fiber}/(2F_{symb})$, where $c_{fiber}$ stands for the celerity of light in the fiber 140.

Reliability Metric-Based Processing

As mentioned previously, artefacts can occur in the phase-related data generated using optical sensing systems, such as the optical sensing system 100 of FIG. 1, that can result in false positive detections of fiber events along a sensed optical fiber. The inventors have determined that $C_{d,t}$ = $|det(J(d,t))|$, the magnitude of the determinant of the (2x2) Jones matrix at location d and time t, sufficiently correlates with the occurrence of these phase artefacts such that that value $C_{d,t}$ can be used as a metric to characterize the reliability of the phase-related data generated using the optical sensing system 100 of FIG. 1. Those skilled in the art will understand that other values may also sufficiently correlate with the occurrence of the known phase artefacts to be able to be used as alternative reliability metrics. For example, $|det(J^a(d,t))|$, $a > 1$, is an example of another value that might be able to be used as a reliability metric. Another value is the intensity $I(d,t) = Trace(J.J^*)$, described previously.

According to certain embodiments of the disclosure, the processing of the optical sensing system 100 of FIG. 1 uses the reliability metric $C_{d,t}$ to characterize the reliability of the phase-related data generated at location $d$ and time $t$. According to some of these embodiments, the reliability metric $C_{d,t}$ is used two times during the processing of the optical sensing system 100: once to select a subset of the available locations along the sensed optical fiber 140 to be used to generate the differential phase data $\Delta\varphi_{t,d}$ used to detect fiber events and a second time to assess the reliability of those fiber-event detections.

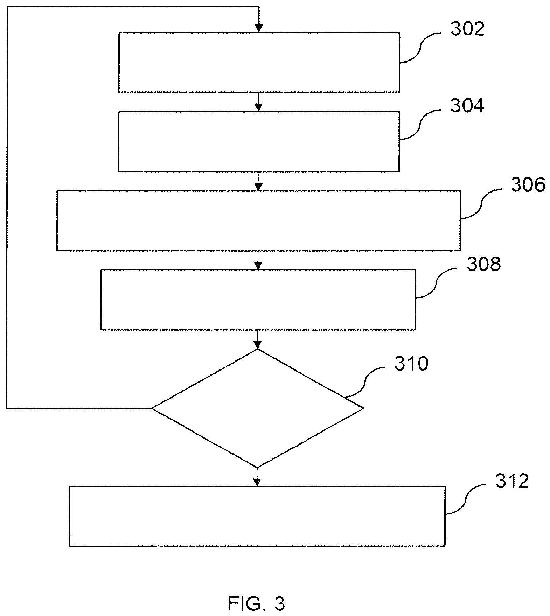

FIG. 3 is a flow diagram of example processing performed by the optical sensing system 100 of FIG. 1 to select the subset of the available locations along the sensed optical fiber 140 to be used to generate the differential phase data $\Delta\varphi_{t,d}$ used to detect fiber events. According to this processing, an appropriate set of, for example, four digital-coded analog signals 111a is repeatedly used to generate a sequence of multiple instances of the probing signal 119 injected into the fiber 140. An average value $mean_d(C_{d,t})$ of the reliability metric $C_{d,t}$ is generated for each location d for the multiple probing-signal instances, where each instance of the probing signal corresponds to a different time t. The locations $d$ having relatively large average reliability metrics are then selected for use in generating the differential phase data $\Delta\varphi_{t,d}$ used to detect fiber events.

In particular, referring to FIG. 3, in step 302, the transmitter 110 injects an instance of the probing signal 119 into the fiber 140, and, in step 304, the receiver 120 receives the corresponding combined optical feedback signal 141. In step 306, the DSP 128 generates the Jones matrix $J(d,t)$ and the corresponding reliability metric $C_{d,t}$ for each location d along the fiber 140 for that probing-signal instance at time $t$, where each location d may correspond to a different backscatterer $S_j$.

In step 308, the DSP 128 updates a combined reliability metric value for each location d that is related to the average reliability metric $mean_d(C_{d,t})$. In one possible implementation, each combined reliability metric value is a running sum of all of the previous reliability metrics $C_{d,t}$ for the corresponding location $d$ during the processing of FIG. 3. Note that the combined reliability metrics are all reset to zero at the start of the processing of FIG. 3.

In some implementations, the processing of FIG. 3 is performed for a specified number of instances of the probing signal 119. In step 310, the DSP 128 determines whether the current probing-signal instance is the last instance for the processing of FIG. 3. If not, then processing returns to step 302 for the next probing-signal instance. Otherwise, processing continues to step 312.

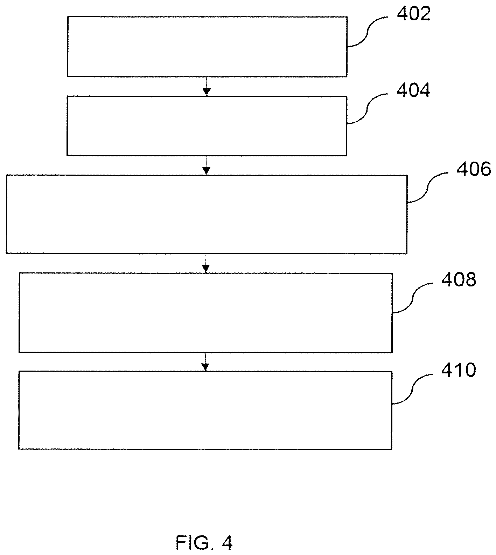

In step 312, the DSP 128 selects the subset of the available locations $d$ to be used, for example, to detect fiber events, as described below in the context of the processing of FIG. 4. In certain implementations, the DSP 128 logically divides the fiber 140 into multiple sub-groups of locations $d$ and, for each sub-group, selects the location $d$ having the greatest combined reliability metric for that sub-group for inclusion in the subset of locations. In some implementations, each sub-group has the same specified number of locations. For example, an optical fiber 140 having 2000 available locations could be divided into 50 sub-groups, each sub-group having 40 locations. In other implementations, the fiber is logically divided into a specified number of segments of equal length, and each sub-group corresponds to the available locations d within a different segment of the fiber. For example, an optical fiber 140 that is 50 km long could be divided into 25,000 segments, each segment being 2 m long and each sub-group corresponding to all of the available locations $d$ within a different fiber segment.

Note further that, in other implementations, instead of logically dividing the fiber 140 into sub-groups and then selecting the location $d$ in each sub-group having the maximum combined reliability metric value, the locations in the subset can be selected using some other algorithm. For example, the subset of locations can be identified by selecting all locations $d$ along the fiber 140 having a combined reliability metric value greater than a specified threshold value. As another example, the subset of locations can be identified by specifying a desired number of locations in the subset and then selecting that number of locations $d$ having the largest combined reliability metric values along the fiber 140.

At the end of the processing of FIG. 3, the DSP 128 will have selected a subset of locations $d$ that can be used to generate the differential phase data $\Delta\varphi_{t,d}$ used to detect fiber events.

FIG. 4 is a flow diagram of example processing performed by the optical sensing system 100 of FIG. 1 to detect fiber events using the subset of locations $d$ selected using the processing of FIG. 3. Note that the processing of FIG. 4 is repeated for each of multiple probing-signal instances. In step 402, the transmitter 110 injects a probing signal 119 into the fiber 140, and, in step 404, the receiver 120 receives the corresponding combined optical feedback signal 141. Note that, in some implementations, the probing signal 119 is based on the same digital-coded analog signals 111a used to generate the probing signals 119 used during the processing of FIG. 3. In other implementations, the digital-coded analog signals 111a may be different. In step 406, the DSP 128 generates Jones matrices $J(d, t)$, the corresponding reliability metrics $C_{d,t}$, and differential phase data $\Delta\varphi(d,t)$ for that probing-signal instance at time $t$, but only for the selected locations $d$ in the subset of locations selected during the processing of FIG. 3

In step 408, the DSP 128 processes the differential phase data $\Delta\varphi(d,t)$ for the current probing-signal instance, along with the differential phase data $\Delta\varphi(d,t)$ from one or more other probing-signal instances from previous implementations of the processing of FIG. 4, to detect fiber events along the fiber 140, e.g., using processing described previously in the context of FIG. 2. For example, each fiber-event detection may correspond to a characteristic variation in the differential phase data $\Delta\varphi(d,t)$ over a number of consecutive probing-signal instances at one or more of the consecutive selected locations $d$ along the fiber 140.

In step 410, the DSP 128 uses the reliability metrics $C_{d,t}$ generated in step 406 to characterize the reliability of the fiber-event detections generated in step 408. In particular, for a detected fiber event determined to have occurred at a particular location $d$ and a particular time $t$, the corresponding value of the reliability metric $C_{d,t}$ at that location and time can be used to quantify the reliability of that fiber-event detection, where greater values of $C_{d,t}$ imply greater reliability. For a detected fiber event determined to have occurred over a number of adjacent locations $d$ and/or over a number of consecutive times $_t$, the corresponding plurality of reliability metric values can be combined or otherwise taken into account to assess the reliability of that fiber-event detection.

Note that some of the previous processing described as being implemented by the DSP 128 could be implemented by another processor external to the optical sensing system 100 of FIG. 1. For example, an external processor could implement the processing of step 410. In certain embodiments, the DSP 128 could generate quantized, multi-bit (e.g., 4-6 bit) value(s) for the reliability metric value(s) $C_{d,t}$ associated with each fiber-event detection, where each quantized value could be normalized based on the actual maximum reliability metric value $C_{d,t}$ generated for the fiber 140. The DSP 128 could then transmit the corresponding multi-bit value(s), along with the location(s) $d$ and time(s) $t$ of each detected fiber event, to an external processor that could use the multi-bit value(s) to characterize the reliability of the fiber-event detection.

The processing of FIGs. 3 and 4 can be coordinated to enable the optical sensing system 100 of FIG. 1 to provide continuous monitoring of the fiber 140. In some embodiments, the processing of FIG. 3 can be performed over an initial time period to select a set of locations d to be used during a subsequent time period. For example, during the first second of every minute, the processing of FIG. 3 can be performed for $10^3$ probing-signal instances to select a subset of locations $d$ to be used in the processing of FIG. 4 for the next 60 seconds. Note that, during the last of those 60 seconds, the processing of FIG. 3 is repeated to select a new subset of locations $d$ while the processing of FIG. 4 continues to use the previous subset of locations $d$.

As described earlier, the optical sensing system 100 of FIG. 1 employs an optical modulation scheme based on four digital coding sequences comprising BPSK codes for each of the X and Y polarization axes. Other embodiments are possible. For example, an alternative optical sensing system could employ an optical modulation scheme based on only two digital coding sequences comprising BPSK codes for only one polarization axis. For such an embodiment, only two digital-coded analog signals 111a would be used by the MZ modulator 116 to modulate only one polarization of the source laser signal 115b to generate the probing signal 119. Such an embodiment would still have four ADCs 126 to digitize the four analog signals 125 recovered from the combined optical feedback signal 141, and the DSP 128 could still have the architecture of FIG. 3.

As another example, another alternative optical sensing system could employ an optical modulation scheme based on two pseudo-random digital coding sequences: one for each of the X and Y polarization axes. Here, too, only two digital-coded analog signals 111a would be used by the MZ modulator 116 to modulate the X and Y polarizations of the source laser signal 115b to generate the probing signal 119. Here, too, such an embodiment would still have four ADCs 126 to digitize the four analog signals 125 recovered from the combined optical feedback signal 141, and the DSP 128 could still have the architecture of FIG. 3.

As yet another example, yet another alternative optical sensing system could employ an optical modulation scheme based on only one pseudo-random digital coding sequences applied to only one of the X and Y polarization axes. Here, only one digital-coded analog signal 111a would be used by the MZ modulator 116 to modulate only one polarization of the source laser signal 115b to generate the probing signal 119. Here, too, such an embodiment would still have four ADCs 126 to digitize the four analog signals 125 recovered from the combined optical feedback signal 141, and the DSP 128 could still have the architecture of FIG. 3.

Those skilled in the art will understand that the optical sensing system 100 of FIG. 1 can perform the processing of FIGs. 3 and 4 in the context of any of the optical sensing techniques described in the Dorize/Awwad and OFS26 papers and in the cited EP applications. For example, although preferred embodiments have been described in which the combined optical feedback signal 141 is generated by backscatterers located along the fiber 140 and returns to the circulator 130 along the same fiber 140, those skilled in the art will understand that alternative embodiments of the disclosure can be based on the multi-fiber configurations described in EP 20305062.0, where the probing signal and the combined optical feedback signal propagate along different optical fibers. As used herein, the term "optical fiber line" refers generically to optical links having a single optical fiber as well as optical links having multiple optical fibers. As such, embodiments of the disclosure can be implemented (i) using an optical fiber line having only one optical fiber, where the probing signal and the combined optical feedback signal both propagate along that one optical fiber or (ii) using an optical fiber line having at least two optical fibers, where the probing signal and the combined optical feedback signal propagate along different optical fibers of that optical fiber line.

The optical sensing system 100 and the optical fiber 140 of FIG. 1 could be used as a sensor designed to detect external events that produce fiber events in the optical fiber 140, such as earthquakes, passing trains, car/pedestrian traffic, intrusions in sensitive areas, etc. The optical sensing system 100 and the optical fiber 140 could also be used to as a sensor to detect the presence of certain chemicals that impact the differential phases of the reflected optical signals. Such chemical events may result in a single temporal differential phase change rather than multiple differential phase changes over time. In that case, such fiber events can be detected by thresholding the temporal differential phase change rather than thresholding variance.

Embodiments have been described that employ a polarization-multiplexed probing sequence and a dual-polarization coherent optical receiver 120 having a dual-polarization 90-degree hybrid coherent mixer 122 that generates eight optical component signals 123 and four O-to-E converters 124 that generate four digital signals 125. Alternative embodiments can employ (i) a single polarization probing sequence and a coherent optical receiver having a single-polarization 90-degree hybrid coherent mixer that generates four optical component signals and (ii) an O-to-E converter that generates only two digital signals. In that case, the DSP 128 would be able to generate only scalar complex results, instead of full Jones matrices, from which noisier (e.g., due to polarization fading in the combined optical feedback signal 141) differential phase estimates could be extracted. In that case, intensity data (or some other suitable value) may be used as the reliability metric.

Although embodiments have been described that detect fiber events based on differential phase data, in alternative embodiments, fiber events can be detected based on state of polarization (SOP) data. For example, the DSP 128 can be configured to monitor the SOP data for temporal variations that indicate the occurrence of fiber events. SOP data is estimated from the full Jones matrix. SOP is commonly represented as a Stokes vector (a set of 4 values describing the polarization state of an electromagnetic field). The impact that a Jones matrix J has on a Stokes vector can be given by computing all or part of the 4x4 Mueller matrix $M$ as $M = A(J \otimes J^*)A^{-1}$ where $\otimes$ is the tensor Kronecker product and

$$A = \begin{bmatrix} 1 & 0 & 0 & 1 \\ 1 & 0 & 0 & -1 \\ 0 & 1 & 1 & 0 \\ 0 & -i & i & 0 \end{bmatrix}$$

. Note that, in certain embodiments, the processing of FIG. 4 could be modified such that, in step 406, SOP data is generated instead of differential phase data, and, in step 408, fiber events are detected based on SOP data instead of being based on differential phase data.

The processing of the optical sensing system 100 of FIG. 1 has been described in the context of FIGs. 3 and 4, where the reliability metric is used two different ways, i.e., in FIG. 3, to select the subset of locations $d$ and again, in FIG. 4, to characterize the reliability of the fiber-event detections, both of which can contribute to the advantageous reduction in false positive detections of fiber events. In alternative embodiments, the reliability metric may be used only one time. For example, the optical sensing system 100 may use the reliability metric in the processing of FIG. 3 to select the subset of locations d, but not use the reliability metric in the processing of FIG. 4 by skipping step 410. As another example, the optical sensing system 100 could omit the processing of FIG. 3 entirely and instead use the reliability metric to perform the processing of FIG. 4 for all of the available locations d in the optical fiber 140 instead of only for a subset of those locations. In both of these alternative embodiments, the reliability metric could still be used to reduce false positive detections of fiber events.

Various modifications of the described embodiments, as well as other embodiments within the scope of the disclosure, which are apparent to persons skilled in the art to which the disclosure pertains are deemed to lie within the scope of the invention, as defined in the appended claims.

Unless explicitly stated otherwise, each numerical value and range should be interpreted as being approximate as if the word "about" or "approximately" preceded the value or range.

It will be further understood that various changes in the details, materials, and arrangements of the parts which have been described and illustrated in order to explain the nature of this disclosure may be made by those skilled in the art without departing from the scope of the disclosure, as defined in the following claims.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements.

The described embodiments are to be considered in all respects as only illustrative and not restrictive. In particular, the scope of the disclosure is indicated by the appended claims rather than by the description and figures herein.

A person of ordinary skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The functions of the various elements shown in the figures, including any functional blocks labeled as "processors" and/or "controllers," may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In this specification including any claims, the term "each" may be used to refer to one or more specified characteristics of a plurality of previously recited elements or steps. When used with the open-ended term "comprising," the recitation of the term "each" does not exclude additional, unrecited elements or steps. Thus, it will be understood that an apparatus may have additional, unrecited elements and a method may have additional, unrecited steps, where the additional, unrecited elements or steps do not have the one or more specified characteristics.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

It should be appreciated by those of ordinary skill in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

As used herein and in the claims, the term "provide" with respect to an apparatus or with respect to a system, device, or component encompasses designing or fabricating the apparatus, system, device, or component; causing the apparatus, system, device, or component to be designed or fabricated; and/or obtaining the apparatus, system, device, or component by purchase, lease, rental, or other contractual arrangement.

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

**Claims**

1.   An apparatus comprising:

an optical transceiver configured to transmit light (119) into an end of an optical fiber line (140) and to perform phase-sensitive measurements of a part (141) of the transmitted light being backscattered and being received at the same end of the optical fiber line; and
wherein the optical transceiver includes a digital processor (128) configured to determine dual-polarization channel matrices for pairs of time and location values based on the measurements, each of the dual-polarization channel matrices describing the part of the light received in response to being passively redirected back at the time and location values of a corresponding one of the pairs; and
wherein the digital processor is configured to identify some of the location values as suitable location values for detecting fiber events along the optical fiber line based on magnitudes of determinants of the dual-polarization channel matrices determined for the location values.

2.   The apparatus of claim 1, wherein the suitable location values correspond to largest ones of the determined magnitudes.

3.   The apparatus of claim 1 or 2, wherein the digital processor is further configured to evaluate the dual-polarization channel matrices for each of the suitable location values at a sequence of time values and is configured to detect one or more fiber events based on a time evolution of the evaluated matrices.

4.   The apparatus of claim 3, wherein the digital processor is configured to detect one or more fiber events based on a time evolution of phases of the determinants of the evaluated matrices.

5.   The apparatus of any of claims 3 - 4, wherein each detected fiber event corresponds to a vibration of a segment of the optical fiber line.

6. The apparatus of any of claims 3-5, wherein the digital processor is configured to provide estimated locations and times for the detected one or more fiber events.

7. The apparatus of claim 6, wherein the optical transceiver is further configured to characterize reliability of individual ones of the detected one or more fiber events based on the magnitude of the determinant of the dual-polarization channel matrix at the estimated location and time for the individual ones of the detected one or more fiber events.

8. The apparatus of any of claims 1-7, wherein identifying the suitable location values comprises:

combining the magnitudes of the determinants of the dual-polarization channel matrices for each location value for multiple time values to generate a combined magnitude value for each location value;
dividing the location values along the optical fiber line into multiple sub-groups of adjacent location values; and
for each sub-group of adjacent location values, selecting a location value in the sub-group having the greatest combined magnitude value in the sub-group as one of the suitable location values.

9. The apparatus of any of claim 1-8, wherein the optical transceiver is configured to transmit light into an end of an optical fiber of the optical fiber line and to perform optical time-domain reflectometry on a part of the transmitted light received at the same end of the same optical fiber of the optical fiber line.

10. A method comprising:

determining dual-polarization channel matrices for pairs of time and location values by performing phase-sensitive optical time-domain reflectometry on an optical fiber line (140), each of the dual-polarization channel matrices describing light received from an end of the optical fiber line in response to light being transmitted into said end and being backscattered in the optical fiber line at the time and location values of a corresponding one of the pairs; and
identifying some of the location values as suitable location values for detecting fiber events along the optical fiber line based on magnitudes of determinants of the dual-polarization channel matrices determined for the location values.

11. The method of claim 10, wherein the suitable location values correspond to largest ones of the determined magnitudes.

12. The method of claim 10 or 11, further comprising:

evaluating the dual-polarization channel matrices for each of the suitable location values at a sequence of time values; and
detecting one or more fiber events based on a time evolution of the evaluated matrices.

13. The method of claim 12, wherein the detecting one or more fiber events is based on a time evolution of phases of the determinants of the evaluated matrices.

14. The method of any of claims 12 - 13, wherein the detecting includes providing one or more estimated locations and times of the one or more detected fiber events.

15. The method of claim 14, further comprising characterizing reliability of individual ones of the detected one or more fiber events based on the magnitude of the determinant of the dual-polarization channel matrix at the estimated location and time for the individual ones of the detected one or more fiber events.


**Patentansprüche**

1. Vorrichtung, Folgendes umfassend:

einen optischen Sendeempfänger, der eingerichtet ist, um Licht (119) in ein Ende einer optischen Faserleitung (140) zu übertragen und phasenempfindliche Messungen eines Teils (141) des übertragenen Lichts durchzuführen, das rückgestreut wird und an dem gleichen Ende der optischen Faserleitung empfangen wird; und wobei der optische Sendeempfänger einen digitalen Prozessor (128) umfasst, der eingerichtet ist, um Dualpolarisationskanalmatrizen für Paare von Zeit- und Ortswerten auf der Grundlage der Messungen zu bestimmen, wobei jede der Dualpolarisationskanalmatrizen den Teil des Lichts, das als Reaktion auf seine passive Rücklenkung empfangen wird, zu den Zeit- und Ortswerten eines entsprechenden der Paare beschreibt; und wobei der digitale Prozessor eingerichtet ist, um manche der Ortswerte als geeignete Ortswerte zum Detektieren von Faserereignissen entlang der optischen Faserleitung auf der Grundlage von Größenbeträgen von Determinanten der Dualpolarisationskanalmatrizen zu identifizieren, die für die Ortswerte bestimmt wurden.

2. Vorrichtung nach Anspruch 1, wobei die geeigneten Ortswerte den größten der bestimmten Größenbeträge entsprechen.

3. Vorrichtung nach Anspruch 1 oder 2, wobei der digitale Prozessor weiterhin eingerichtet ist, um die Dualpolarisationskanalmatrizen für jeden der geeigneten Ortswerte bei einer Sequenz von Zeitwerten zu bewerten, und eingerichtet ist, um ein oder mehrere Faserereignisse auf der Grundlage einer zeitlichen Entwicklung der bewerteten Matrizen zu detektieren.

4. Vorrichtung nach Anspruch 3, wobei der digitale Prozessor eingerichtet ist, um ein oder mehrere Faserereignisse auf der Grundlage einer zeitlichen Entwicklung von Phasen der Determinanten der bewerteten Matrizen zu detektieren.

5. Vorrichtung nach einem der Ansprüche 3 bis 4, wobei jedes detektierte Faserereignis einer Schwingung eines Segments der optischen Faserleitung entspricht.

6. Vorrichtung nach einem der Ansprüche 3 bis 5, wobei der digitale Prozessor eingerichtet ist, um geschätzte Orte und Zeiten für das eine oder die mehreren detektierten Faserereignisse bereitzustellen.

7. Vorrichtung nach Anspruch 6, wobei der optische Sendeempfänger weiterhin eingerichtet ist, um eine Zuverlässigkeit von individuellen des einen oder der mehreren detektierten Faserereignisse auf der Grundlage des Größenbetrags der Determinante der Dualpolarisationskanalmatrix an dem geschätzten Ort und der geschätzten Zeit für die individuellen des einen oder der mehreren detektierten Faserereignisse zu charakterisieren.

8. Vorrichtung nach einem der Ansprüche 1 bis 7, wobei Identifizieren der geeigneten Ortswerte Folgendes umfasst:

Vereinigen der Größenbeträge der Determinanten der Dualpolarisationskanalmatrizen für jeden Ortswert für mehrere Zeitwerte, um einen kombinierten Größenbetragswert für jeden Ortswert zu erzeugen;
Aufteilen der Ortswerte entlang der optischen Faserleitung in mehrere Subgruppen benachbarter Ortswerte; und
für jede Subgruppe benachbarter Ortswerte, Auswählen eines Ortswerts in der Subgruppe mit dem größten kombinierten Größenbetragswert in der Subgruppe als einen der geeigneten Ortswerte.

9. Vorrichtung nach einem der Ansprüche 1 bis 8, wobei der optische Sendeempfänger eingerichtet ist, um Licht in ein Ende einer optischen Faser der optischen Faserleitung zu übertragen und optische Reflektometrie im Zeitbereich auf einem Teil des übertragenen Lichts durchzuführen, das an dem gleichen Ende der gleichen optischen Faser der optischen Faserleitung empfangen wird.

10. Verfahren, Folgendes umfassend:

Bestimmen von Dualpolarisationskanalmatrizen für Paare von Zeit- und Ortswerten durch Durchführen von phasenempfindlicher optischer Reflektometrie im Zeitbereich auf einer optischen Faserleitung (140), wobei jede der Dualpolarisationskanalmatrizen Licht, das aus einem Ende der optischen Faserleitung als Reaktion auf Licht empfangen wird, das in das Ende übertragen wird und in der optischen Faserleitung rückgestreut wird, zu den Zeit- und Ortswerten eines entsprechenden der Paare beschreibt; und
Identifizieren von manchen der Ortswerte als geeignete Ortswerte zum Detektieren von Faserereignissen entlang der optischen Faserleitung auf der Grundlage von Größenbeträgen von Determinanten der Dualpolarisationskanalmatrizen, die für die Ortswerte bestimmt wurden.

11. Verfahren nach Anspruch 10, wobei die geeigneten Ortswerte den größten der bestimmten Größenbeträge entsprechen.

**12.** Verfahren nach Anspruch 10 oder 11, weiterhin Folgendes umfassend:

Bewerten der Dualpolarisationskanalmatrizen für jeden der geeigneten Ortswerte bei einer Sequenz von Zeitwerten; und

Detektieren eines oder mehrerer Faserereignisse auf der Grundlage einer zeitlichen Entwicklung der bewerteten Matrizen.

**13.** Verfahren nach Anspruch 12, wobei das Detektieren eines oder mehrerer Faserereignisse auf einer zeitlichen Entwicklung von Phasen der Determinanten der bewerteten Matrizen basiert.

**14.** Verfahren nach einem der Ansprüche 12 bis 13, wobei das Detektieren Bereitstellen eines oder mehrerer geschätzter Orte und Zeiten des einen oder der mehreren detektierten Faserereignisse umfasst.

**15.** Verfahren nach Anspruch 14, weiterhin umfassend Charakterisieren einer Zuverlässigkeit von individuellen des einen oder der mehreren detektierten Faserereignisse auf der Grundlage des Größenbetrags der Determinante der Dualpolarisationskanalmatrix an dem geschätzten Ort und der geschätzten Zeit für die individuellen des einen oder der mehreren detektierten Faserereignisse.

**Revendications**

**1.** Appareil comprenant :

un émetteur-récepteur optique configuré pour émettre de la lumière (119) à l'intérieur d'une extrémité d'une ligne de fibres optiques (140) et pour réaliser des mesures sensibles à la phase sur une partie (141) de la lumière émise qui est rétrodiffusée et qui est reçue à la même extrémité de la ligne de fibres optiques ; et

dans lequel l'émetteur-récepteur optique comporte un processeur numérique (128) configuré pour déterminer des matrices de canal à double polarisation pour des paires de valeurs de temps et d'emplacement sur la base des mesures, chacune des matrices de canal à double polarisation décrivant la partie de la lumière reçue en réponse à son renvoi en arrière passif aux valeurs de temps et d'emplacement de l'une correspondante des paires ; et

dans lequel le processeur numérique est configuré pour identifier certaines des valeurs d'emplacement comme des valeurs d'emplacement appropriées pour détecter des événements de fibre le long de la ligne de fibres optiques sur la base d'amplitudes de déterminants des matrices de canal à double polarisation déterminées pour les valeurs d'emplacement.

**2.** Appareil de la revendication 1, dans lequel les valeurs d'emplacement appropriées correspondent aux plus grandes des amplitudes déterminées.

**3.** Appareil de la revendication 1 ou 2, dans lequel le processeur numérique est également configuré pour évaluer les matrices de canal à double polarisation pour chacune des valeurs d'emplacement appropriées à une séquence de valeurs de temps et est configuré pour détecter un ou plusieurs événements de fibre sur la base d'une évolution temporelle des matrices évaluées.

**4.** Appareil de la revendication 3, dans lequel le processeur numérique est configuré pour détecter un ou plusieurs événements de fibre sur la base d'une évolution temporelle de phases des déterminants des matrices évaluées.

**5.** Appareil de l'une quelconque des revendications 3 et 4, dans lequel chaque événement de fibre détecté correspond à une vibration d'un segment de la ligne de fibres optiques.

**6.** Appareil de l'une quelconque des revendications 3 à 5, dans lequel le processeur numérique est configuré pour fournir des emplacements et temps estimés pour le ou les événements de fibre détectés.

**7.** Appareil de la revendication 6, dans lequel l'émetteur-récepteur optique est également configuré pour caractériser la fiabilité d'événements individuels parmi le ou les événements de fibre détectés sur la base de l'amplitude du déterminant de la matrice de canal à double polarisation à l'emplacement et au temps estimés pour les événements individuels parmi le ou les événements de fibre détectés.

8. Appareil de l'une quelconque des revendications 1 à 7, dans lequel l'identification des valeurs d'emplacement appropriées comprend :

   la combinaison des amplitudes des déterminants des matrices de canal à double polarisation pour chaque valeur d'emplacement pour de multiples valeurs de temps pour générer une valeur d'amplitude combinée pour chaque valeur d'emplacement ;
   la division des valeurs d'emplacement le long de la ligne de fibres optiques en de multiples sous-groupes de valeurs d'emplacement adjacentes ; et
   pour chaque sous-groupe de valeurs d'emplacement adjacentes, la sélection d'une valeur d'emplacement dans le sous-groupe ayant la plus grande valeur d'amplitude combinée dans le sous-groupe comme une des valeurs d'emplacement appropriées.

9. Appareil de l'une quelconque des revendications 1 à 8, dans lequel l'émetteur-récepteur optique est configuré pour émettre de la lumière à l'intérieur d'une extrémité d'une fibre optique de la ligne de fibres optiques et pour réaliser une réflectométrie optique dans le domaine temporel sur une partie de la lumière émise reçue à la même extrémité de la même fibre optique de la ligne de fibres optiques.

10. Procédé comprenant :

   la détermination de matrices de canal à double polarisation pour des paires de valeurs de temps et d'emplacement par réalisation d'une réflectométrie optique sensible à la phase dans le domaine temporel sur une ligne de fibres optiques (140), chacune des matrices de canal à double polarisation décrivant la lumière reçue depuis une extrémité de la ligne de fibres optiques en réponse à de la lumière qui est émise à l'intérieur de ladite extrémité et qui est rétrodiffusée dans la ligne de fibres optiques aux valeurs de temps et d'emplacement de l'une correspondante des paires ; et
   l'identification de certaines des valeurs d'emplacement comme des valeurs d'emplacement appropriées pour détecter des événements de fibre le long de la ligne de fibres optiques sur la base d'amplitudes de déterminants des matrices de canal à double polarisation déterminées pour les valeurs d'emplacement.

11. Procédé de la revendication 10, dans lequel les valeurs d'emplacement appropriées correspondent aux plus grandes des amplitudes déterminées.

12. Procédé de la revendication 10 ou 11, comprenant en outre :

   l'évaluation des matrices de canal à double polarisation pour chacune des valeurs d'emplacement appropriées à une séquence de valeurs de temps ; et
   la détection d'un ou plusieurs événements de fibre sur la base d'une évolution temporelle des matrices évaluées.

13. Procédé de la revendication 12, dans lequel la détection d'un ou plusieurs événements de fibre est basée sur une évolution temporelle de phases des déterminants des matrices évaluées.

14. Procédé de l'une quelconque des revendications 12 et 13, dans lequel la détection comporte l'obtention d'un ou plusieurs emplacements et temps estimés du ou des événements de fibre détectés.

15. Procédé de la revendication 14, comprenant en outre la caractérisation de la fiabilité d'événements individuels parmi le ou les événements de fibre détectés sur la base de l'amplitude du déterminant de la matrice de canal à double polarisation à l'emplacement et au temps estimés pour les événements individuels parmi le ou les événements de fibre détectés.

FIG. 1

100

127  210  212  220  222  230  232

4

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3460441 A1
- EP 3595195 A1
- EP 19305164

- EP 20305062
- EP 19306137

**Non-patent literature cited in the description**

- **C. DORIZE ; E. AWWAD.** Enhancing the performance of coherent OTDR systems with polarization diversity complementary codes. *Optics Express,* 2018, vol. 26 (10), 12878-12890

- **E. AWWAD ; C. DORIZE ; P. BRINDEL ; J. RENAUDIER ; G. CHARLET.** Large Bandwidth Phase-Sensitive DAS with Novel Polarization-Multiplexed Probing Technique. *Optical Fiber Sensors (OFS26) conference, Lausanne, Switzerland, paper ThE63,* 2018